Europäisches Patentamt

European Patent Office

Office européen des brevets

(19)

(11) Veröffentlichungsnummer : **0 044 015**
**B1**

(12) EUROPÄISCHE PATENTSCHRIFT

(45) Veröffentlichungstag der Patentschrift :
05.10.83

(21) Anmeldenummer : 81105251.3

(22) Anmeldetag : 07.07.81

(51) Int. Cl.³ : **F 16 L 41/02, F 24 D 3/10**

(54) Rohrverteiler für Zentralheizungsanlagen.

(30) Priorität : 10.07.80 DE 3026086

(43) Veröffentlichungstag der Anmeldung :
20.01.82 Patentblatt 82/03

(45) Bekanntmachung des Hinweises auf die Patenterteilung : 05.10.83 Patentblatt 83/40

(84) Benannte Vertragsstaaten :
AT BE CH FR GB IT LI LU NL SE

(56) Entgegenhaltungen :
DE B 2 812 698

(73) Patentinhaber : Schenk, Artur
Eutinger Strasse 13a
D-7532 Niefern-Öschelbronn (DE)

(72) Erfinder : Schenk, Artur
Eutinger Strasse 13a
D-7532 Niefern-Öschelbronn (DE)

(74) Vertreter : Mayer, Friedrich, Dr. et al
Patentanwälte Dr. Mayer & Frank Westliche 24
D-7530 Pforzheim (DE)

Rohrverteiler für Zentralheizungsanlagen

Die Erfindung betrifft einen Rohrverteiler für Zentralheizungsanlagen mit zwei Kammern, von denen eine als Zulauf-, die andere als Rücklaufkammer dient, wobei die zu einem gemeinsamen Gehäuse zusammengefaßten Kammern durch eine eingeschweißte Trennwand voneinander getrennt sind, die den Zulauf über die in Längsachse des Gehäuses in gerader Reihe angeordneten Mündungen der Verteilerleitungen wechselweise lenkt.

Ein derartiger Rohrverteiler ist aus der Deutschen Patentschrift 26 59 348 bekannt. Der dort beschriebene Rohrverteiler umgibt die Verteilerleitungen in einer Sinusform, so daß die Verschweißung der beiden Kammern ebenfalls entlang einer Sinuskurve erfolgen muß.

Demgegenüber stellt sich die Erfindung zur Aufgabe, einen Rohrverteiler dieser Art derart weiterzubilden, daß die Verschweißung der beiden Kammern einfacher, insbesondere mit wesentlich kürzerem Schweißweg vorgenommen werden kann.

Dies erreicht die Erfindung dadurch, daß die Trennwand in ihrem an die Mündungen der Verteilerleitungen angrenzenden Teil in Form von halbtrichterförmigen Aus- bzw. Einformungen ausgebildet ist und im übrigen in einer Ebene verläuft.

Bis auf die halbtrichterartigen Aus- bzw. Einformungen der Trennwand ergibt sich somit ein gerader Verlauf und damit auch ein gerader Verlauf der Schweißnaht mit der die Trennwand zwischen die beiden Gehäusehälften und damit die beiden Gehäusehälften zum gemeinsamen Gehäuse zusammengeschweißt werden.

Eine derartige Schweißung ist auch automatisch ohne weiteres auszuführen, und geht schneller vonstatten als die kompliziertere Schweißung der sinusförmigen Trennwand bei der obengenannten Patentschrift.

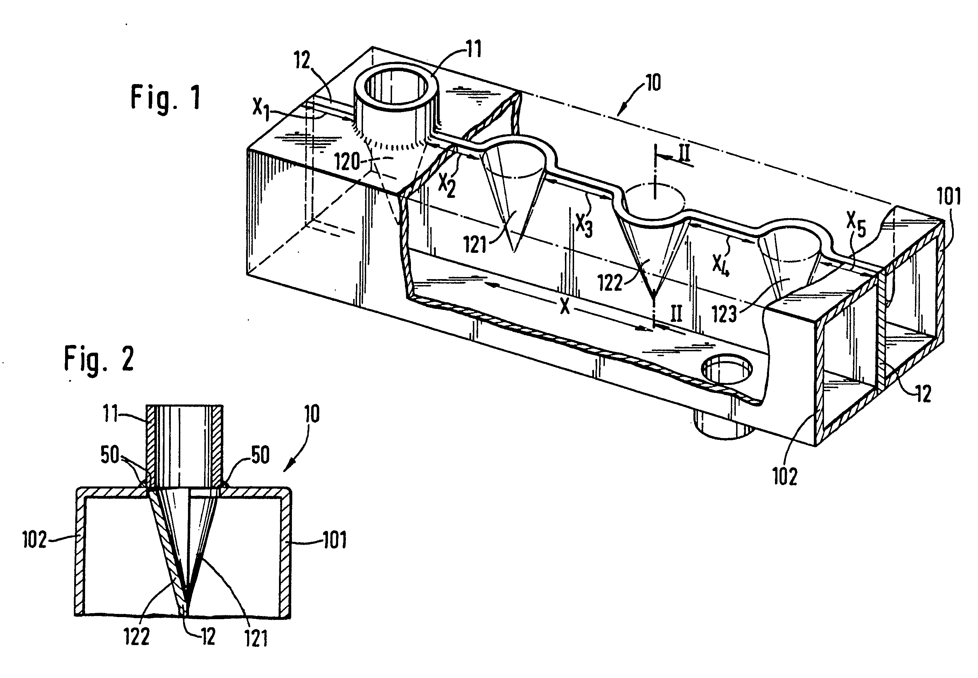

Die Erfindung wird nun anhand der beiliegenden Figur näher erläutert.

Der erfindungsgemäße Rohrverteiler 10 besteht aus zwei Gehäusehälften 101 und 102, die mittels der eingesetzten Trennwand 12 untereinander verschweißt sind. Die Trennwand 12 verläuft im wesentlichen eben, lediglich in ihrem an die Mündungen 11 der Verteilerleitung angrenzenden Teil weist sie halbtrichterförmige Aus- bzw. Einformungen 120 ... 123 auf, die die Mündungen 11 (nur eine dargestellt) wechselseitig umgeben und dadurch benachbarte Mündungen 11 jeweils zur Vorlaufkammer bzw. zur Rücklaufkammer verbinden. Beispielsweise wird die Vorlaufkammer durch die erste Gehäusehälfte 101 und die Trennwand 12 und die Rücklaufkammer durch die Trennwand 12 und die zweite Gehäusehälfte 102 gebildet. Man erkennt, daß zur Verschweißung der beiden Gehäusehälften 101 und 102 gerade Schweißwege zurückzulegen sind, nämlich der Schweißweg X an der Unterseite des Rohrverteilers und eine Anzahl von geraden Schweißwegen $X_1$ ... $X_5$ an der Oberseite der Trennwand 12 zwischen den trichterförmigen Ein- bzw. Ausformungen 120 ... 123.

Diese besondere Gestaltung der Trennwand 12 erlaubt daher eine äußerst rationelle Verschweißung der beiden Gehäusehälften 101 und 102 mit der Trennwand 12.

Nach dieser Verschweißung werden dann die Mündungen 11 mit der gekrümmtem Oberkante der Trennwand 12 und beiden Gehäusehälften verschweißt. Zu diesem Zweck ist es vorteilhaft, wenn der Radius des Öffnungsquerschnittes der Ausformungen/Einformungen 120 ... 123 dem Radius der Mündungen 11 entspricht, wie dies in der Detaildarstellung der Figur gezeigt ist. Man erreicht dadurch, daß beim Anschweißen der Mündungen 11 (bzw. separater Anschlußstutzen) das Schweißmaterial 50 die Mündung 11 gleichzeitig mit der Trennwand 12 und den beiden Gehäusehälften verbindet, so daß eine separate Schweißverbindung zwischen der jeweiligen Gehäusehälfte und den Halbtrichtern entfallen kann.

**Ansprüche**

1. Rohrverteiler (10) für Zentralheizungsanlagen mit zwei Kammern, von denen eine als Zulauf-, die andere als Rücklaufkammer dient, wobei die zu einem gemeinsamen Gehäuse zusammengefaßten Kammern durch eine eingeschweißte Trennwand (12) voneinander getrennt sind, die den Zulauf über die in Längsachse des Gehäuses in gerader Reihe angeordneten Mündungen (11) zu den Verteilerleitungen wechselweise lenkt, dadurch gekennzeichnet, daß die Trennwand (12) in ihrem an die Mündungen (11) der Verteilerleitungen angrenzenden Teil in Form von halbtrichterförmigen Aus- bzw. Einformungen (120, 121, 122, 123) ausgebildet ist und im übrigen in einer Ebene verläuft.

2. Rohrverteiler nach Anspruch 1, dadurch gekennzeichnet, daß der Radius des Öffnungsquerschnittes der halbtrichterförmigen Aus- bzw. Einformungen (120, 121, 122, 123) dem Radius der Mündungen (11) entspricht.

**Claims**

1. A pipe manifold (10) for central heating systems, including two chambers, one chamber being an input supply chamber and the other chamber being an output chamber, wherein the chambers are combined to form one common housing and are separated from one another by means of a welded-in dividing wall (12) which alternately guides the input material to the manifold conduits via apertures (11), disposed in a straight line when viewed in the direction of the longitudinal axis of the housing, characterised in that the dividing wall (12), in its portion adjacent the apertures (11) formed in the manifold conduits, is in the form of semi-funnel-shaped moulded-out or moulded-in portions (120, 121, 122, 123) and, in addition, extends in one plane.

2. A pipe manifold according to claim 1, characterised in that the radius of the opening cross-section of the semi-funnel-shaped moulded-out or moulded-in portions (120, 121, 122, 123) corresponds to the radius of the apertures (11).

**Revendications**

1. Distributeur (10) pour installations de chauffage central comprenant deux chambres servant l'une de chambre d'arrivée et l'autre de chambre de retour, les chambres réunies dans un boîtier commun étant séparées l'une de l'autre par une paroi de séparation (12) soudée, qui guide l'écoulement vers les conduites de distribution à travers des embouchures (11) disposées en rangée rectiligne dans l'axe longitudinal du boîtier, caractérisé en ce que la paroi de séparation (12) présente, dans sa partie adjacente aux embouchures (11), des reliefs ou des creux en forme de demi-entonnoirs (120, 121, 122, 123) et s'étend au demeurant dans un plan.

2. Distributeur selon la revendication 1, caractérisé en ce que le rayon des sections transversales d'ouverture des reliefs ou des creux en forme de demi-entonnoirs (120, 121, 122, 123) correspond au rayon des embouchures (11).

Fig. 1

Fig. 2

0 044 015